(19) Europäisches Patentamt / European Patent Office / Office européen des brevets

(11) **EP 3 695 219 B1**

(12) **FASCICULE DE BREVET EUROPEEN**

(45) Date de publication et mention de la délivrance du brevet:
**16.07.2025 Bulletin 2025/29**

(51) Classification Internationale des Brevets (IPC):
**G01N 29/04** *(2006.01)* **G01N 29/22** *(2006.01)*
**G01N 29/44** *(2006.01)* **G01N 29/24** *(2006.01)*

(21) Numéro de dépôt: **18796724.5**

(52) Classification Coopérative des Brevets (CPC):
**G01N 29/2475**

(22) Date de dépôt: **11.10.2018**

(86) Numéro de dépôt international:
**PCT/FR2018/052530**

(87) Numéro de publication internationale:
**WO 2019/073179 (18.04.2019 Gazette 2019/16)**

(54) **PROCÉDÉ DE DÉTECTION DE DÉFAUTS D'UNE STRUCTURE**

VERFAHREN ZUR ERKENNUNG VON DEFEKTEN BEI EINER STRUKTUR

METHOD FOR DETECTING DEFECTS IN A STRUCTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.10.2017 FR 1759562**
**20.02.2018 FR 1851433**

(43) Date de publication de la demande:
**19.08.2020 Bulletin 2020/34**

(73) Titulaires:
• **Commissariat à l'Energie Atomique et aux Energies Alternatives**
**75015 Paris (FR)**
Etats contractants désignés:
**FR**
• **Safran**
**75015 Paris (FR)**

(72) Inventeurs:
• **PALLADINO, Luca**
**77550 Moissy-Cramayel (FR)**
• **JANFAOUI, Sabri**
**77550 Moissy-Cramayel (FR)**

(74) Mandataire: **Regimbeau**
**Parc d'affaires Cap Nord A**
**2, allée Marie Berhaut**
**CS 71104**
**35011 Rennes Cedex (FR)**

(56) Documents cités:
FR-A1- 2 262 303    US-A- 4 893 025
US-A1- 2005 094 490    US-A1- 2006 164 919
US-A1- 2006 287 842    US-A1- 2009 192 727
US-A1- 2014 123 758    US-B1- 8 707 787

• D. A. TIBADUIZA ET AL: "Damage classification in structural health monitoring using principal component analysis and self-organizing maps : DAMAGE CLASSIFICATION IN SHM USING PCA AND SOM", STRUCTURAL CONTROL AND HEALTH MONITORING, vol. 20, no. 10, 13 December 2012 (2012-12-13), US, pages 1303 - 1316, XP055480054, ISSN: 1545-2255, DOI: 10.1002/stc.1540

EP 3 695 219 B1

**Description**

DOMAINE TECHNIQUE

L'invention concerne un procédé de détection de défauts d'une structure.
Un domaine d'application de l'invention concerne les structures utilisées dans le domaine de l'aéronautique.

ETAT DE LA TECHNIQUE

On connaît des dispositifs de détection de défauts de structures, par exemple par les documents US 7,937,248 et US 2015/0308920.
Le document US 2006/287842 décrit un procédé de détection de défaut d'une structure par des transducteurs, dans lequel un graphe incluant des trajets entre les transducteurs est généré, des poids sont calculés à partir des signaux des transducteurs et des routes parmi les trajets entre les transducteurs sont supprimées ou sélectionnées.
Le document D.A. TIBADUIZA et al. : « Damage classification in structural health monitoring using principal component analysis and self-organizing maps" DAMAGE CLASSIFICATION IN SHM USING PCA AND SOM", STRUCTURAL CONTROL AND HEALTH MONITORING, US, (20121213), vol. 20, no. 10, ISSN 1545-2255, pages 1303 - 1316, décrit la comparaison de signaux de transducteurs à une référence.
Le document US 2006/164919 décrit un dispositif à ultrasons pour la détection d'objets sous-marins par des transducteurs d'émission et de réception.
Le document US 4 893 025 décrit un capteur pour un équipement automatisé, comportant des émetteurs et des récepteurs de lumière.
Le document US 2005/094490 décrit un réseau de transducteurs ultrasonores pour l'évaluation non destructive de matériaux.
Le document US2009/192727 D6 décrit un système de contrôle de défauts d'une structure utilisant des transducteurs d'émission et de réception d'une onde de surface, qui sont positionnés sur une structure pour contrôler les défauts.
Le document US 8 707 787 décrit un système de détection de défauts sur une structure aéronautique, comportant des transducteurs émetteurs et récepteurs.
Le document FR 2 262 303 décrit un dispositif de localisation de sources d'émissions d'ondes de contrainte, comportant des transducteurs acoustiques émetteurs ou récepteurs.
Le document US 2014/123758 décrit un système de contrôle de l'intégrité d'une structure par des capteurs acoustiques répartis sur un four pour détecter les déformations de celui-ci.
Le principal objectif des compagnies aériennes est d'assurer des vols réguliers et ponctuels à des prix compétitifs, de façon à se placer favorablement face à leurs concurrents. De ce fait, elles sont attentives aux coûts de maintenance de leurs équipements et intéressées à travailler avec des équipementiers ayant conscience de l'enjeu de la disponibilité et de la maintenabilité d'un produit pendant son cycle de vie.
Aujourd'hui, la plupart des éléments purement structuraux d'aéronefs ne sont visités que lors des entretiens périodiques auxquels lesdits aéronefs sont soumis (typiquement des inspections de type C, ou « C-check » dans la terminologie anglo-saxonne), par exemple tous les 24 mois, ou encore toutes les 10000 heures de vol. De manière plus précise, la maintenance de la structure de type IFS (structure fixée de manière interne, ou « internal fixed structure » dans la terminologie anglo-saxonne,) d'un inverseur de poussée (nacelle) d'un aéronef est aujourd'hui inspectée par un opérateur n'ayant pas à disposition d'outils d'aide à la prise de décision.
On cherche deux axes d'amélioration : le premier est lié à la sécurité et le second est lié à des aspects économiques.
Le fait que la vérification de l'intégrité structurale soit réalisée uniquement lors des entretiens périodiques et par un opérateur humain non assisté, laisse la porte ouverte à l'éventualité de voler avec un système n'ayant pas 100% de son intégrité. Ici, l'aspect sécuritaire voudrait que le système structural soit remplacé juste avant la perte d'intégrité, ce qui implique le besoin de pousser plus loin la maintenance préventive.
Le remplacement des composants lors de l'inspection de type C a par ailleurs deux inconvénients majeurs : d'une part, les systèmes sont souvent remplacés de manière préventive, alors qu'ils sont encore aptes au vol ; d'autre part, ils sont parfois surdimensionnés, pour tenir les intervalles de maintenance prévus sans dégrader la sûreté. De ce fait, il y a un coût pour l'exploitant qui pourrait être évité ou tout au moins réduit de manière significative.
On cherche à suivre de manière continue et/ou périodique l'évolution de l'état de santé des structures aéronautiques. L'objectif est de résoudre les problèmes évoqués précédemment et par la même occasion d'espacer, de simplifier, voire de réorganiser les opérations de maintenance.
On connaît des systèmes de diagnostic de l'état de la structure, également appelés systèmes SHM (pour « Structural Health Monitoring » dans la terminologie anglo-saxonne). Un système SHM consiste essentiellement en un système de contrôle non destructif qui intègre des capteurs de manière permanente. Les données collectées permettent de détecter l'apparition, et de suivre l'évolution, de dommages/défauts dans la structure. Idéalement, le système SHM doit pouvoir :

(i) détecter la présence d'un défaut,
(ii) le localiser,
(iii) déterminer sa taille, et
(iv) fournir un pronostic sur la durée de vie de la structure.

Les enjeux économiques sont dans un premier temps de réduire le temps d'immobilisation de l'aéronef, parce que les réparations peuvent être prédites ou les diagnostics automatisés. Dans un second temps, l'enjeu est de ne remplacer que les structures ou composants ayant vraiment besoin de l'être, et, partant, d'avoir moins d'éléments à remplacer, et donc à produire.
L'instrumentation de la structure permet d'obtenir des mesures, par exemple des mesures d'ondes acoustiques ou guidées (par exemple des ondes de Lamb) qui doivent être traitées et analysées afin de définir si la structure présente ou non un défaut.
Suivant un état de la technique, l'analyse est aujourd'hui réalisée en comparant les mesures qui sont prises sur une structure à analyser (dit échantillon sous analyse) vis-à-vis de celles qui sont prises sur une structure de référence (dit échantillon de référence), qui elle est par définition à l'état sain.
Les mesures qui sont faites sur la structure de référence sont souvent prises dans des états thermiques de référence bien définis. Ce choix implique une contrainte, qui est que les mesures sur la structure à analyser ne peuvent pas être réalisées avant qu'elle soit arrivée à un état thermique identique à l'état de référence dans lequel les mesures sur la structure de référence ont été faites.
Cette problématique implique des coûts liés à des retards dans l'analyse et donc à des retards dans la disponibilité de l'aéronef.

RESUME DE L'INVENTION

L'invention vise à obtenir un procédé de détection de défauts d'une structure, notamment une structure aéronautique, permettant de réaliser une évaluation des défauts sans recourir à l'état de référence, mais qui se base seulement sur les informations à sa disposition (de l'état actuel) pour identifier la présence d'un défaut.
A cet effet, un premier objet de l'invention est un procédé de détection de défauts d'une structure suivant la revendication 1.
Les revendications 2 à 14 concernent des modes de réalisation du procédé de détection.

DESCRIPTIF RAPIDE DES FIGURES

L'invention sera mieux comprise à la lecture de la description qui va suivre, donnée uniquement à titre d'exemple non limitatif en référence aux dessins annexés, sur lesquels :

- la figure 1 représente schématiquement un synoptique modulaire d'un dispositif de détection de défauts suivant un mode de réalisation de l'invention,
- la figure 2 représente schématiquement un exemple d'implantation de transducteurs du procédé et du dispositif de détection de défauts dans une zone d'une structure à surveiller d'un premier type, suivant un mode de réalisation de l'invention,
- la figure 3 représente schématiquement un exemple d'implantation de transducteurs du procédé et du dispositif de détection de défauts dans une zone d'une structure à surveiller d'un deuxième type, suivant un mode de réalisation de l'invention,
- la figure 4 illustre schématiquement le recouvrement entre deux cercles d'émission limitrophes de transducteurs,
- la figure 5 représente schématiquement un premier exemple de maillage d'une structure par des transducteurs du procédé et du dispositif de détection de défauts suivant un mode de réalisation de l'invention,
- la figure 6 représente schématiquement un deuxième exemple de maillage d'une structure par des transducteurs du procédé et du dispositif de détection de défauts suivant un mode de réalisation de l'invention,
- la figure 7 représente schématiquement un troisième exemple de maillage d'une structure par des transducteurs du procédé et du dispositif de détection de défauts suivant un mode de réalisation de l'invention,
- la figure 8 représente schématiquement un organigramme d'un premier mode de mise en oeuvre du procédé de détection de défauts suivant l'invention,
- la figure 9 représente schématiquement un organigramme d'un deuxième mode de mise en oeuvre du procédé de détection de défauts suivant l'invention,

- la figure 10 représente schématiquement la structuration d'une matrice de mesures, pouvant être utilisée suivant un mode de mise en oeuvre du procédé de détection de défauts suivant l'invention,
- la figure 11 représente schématiquement un organigramme schématique, illustrant le principe du calcul d'un indicateur de défauts, pouvant être utilisé suivant un mode de mise en oeuvre du procédé de détection de défauts suivant l'invention,
- la figure 12 représente schématiquement un exemple de résultat de la détection de défauts, indiquant en abscisse un numéro d'essai, et en ordonnées la valeur d'un indicateur de défaut selon la figure 11, pouvant être utilisé suivant un mode de mise en oeuvre du procédé de détection de défauts suivant l'invention.

DESCRIPTION DETAILLEE DE L'INVENTION

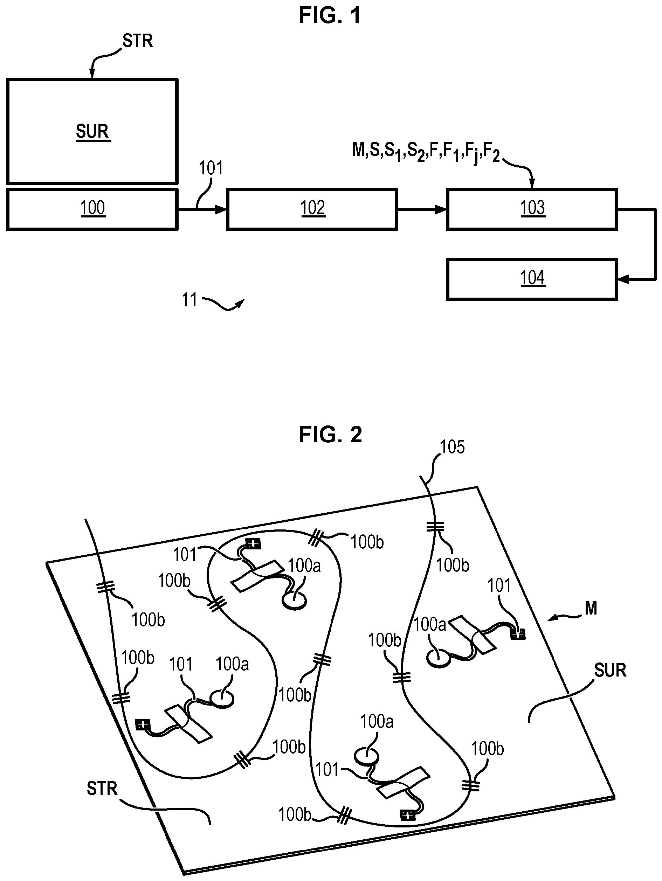

Aux figures 1 à 6, le procédé de détection de défauts d'une structure et le dispositif 11 de détection de défauts d'une structure suivant l'invention utilisent une pluralité de transducteurs 100 ou capteurs 100, qui sont positionnés sur ou dans une structure STR, dont il s'agit de détecter et localiser les éventuels défauts. Le dispositif 11 suivant l'invention peut être un système de diagnostic de l'état de la structure. Le procédé suivant l'invention peut être un procédé de diagnostic de l'état de la structure. La structure STR peut être en tout type de matériau, pouvant être par exemple composites (par exemple composites de types monolithique et/ou composite de type sandwich et/ou à alvéoles pouvant être en nid d'abeille ou autre). La structure STR peut être une partie d'un aéronef, comme par exemple une partie de turbomachines d'avion, comme par exemple de turboréacteurs d'avion ou de turbopropulseurs d'avion ou une partie d'un inverseur de poussée (nacelle). Le procédé et le dispositif 11 suivant l'invention peuvent être utilisés directement sur une partie de l'aéronef lui-même, la structure STR étant alors située à demeure dans l'aéronef. Le procédé et le dispositif 11 suivant l'invention peuvent également être utilisés sur une partie de l'aéronef, ayant été démontée de celui-ci. L'invention peut s'appliquer à une structure de type IFS (structure fixée de manière interne, ou « Internal Fixed Structure » dans la terminologie anglo-saxonne) d'une nacelle d'une turbomachine d'avion ou autre, cette structure étant constituée de matériaux composites de types monolithique et sandwich, mais elle peut être étendue à toute autre structure de l'avion.

Les transducteurs 100 peuvent être de tout type, par exemple du type ultrasonore (par exemple de type piézo-électrique ou autre, notamment du type PZT, i.e. à Titano-Zirconate de Plomb) ou autre, par exemple de type optique (par exemple en comportant un ou plusieurs réseau(x) de Bragg d'une ou plusieurs fibre(s) optique(s)). De manière privilégiée, dans le cadre de l'invention, la pluralité de transducteurs 100 est réparti entre des premiers transducteurs E aptes à se trouver dans un mode d'émission (également appeler mode d'excitation) d'une part, et d'autre part des seconds transducteurs R aptes à se trouver dans un mode de réception. Lorsqu'un transducteur 100 est dans le mode d'émission, ce premier transducteur E émet un signal d'excitation prédéterminé. Lorsqu'un transducteur 100 est dans le mode de réception, ce second transducteur R reçoit un signal de réception en réponse au signal d'excitation émis par un premier transducteur E. Les signaux d'excitation et les signaux de réception sont aptes à se propager à travers la structure STR, par exemple le long de la structure STR ou dans la structure STR, par exemple le long d'une surface SUR de la structure STR. Lorsque le signal d'excitation émis par un premier transducteur E ne rencontre pas de défauts de la structure STR, le signal de réception reçu par un second transducteur R correspond à ce signal d'excitation ou est égal à ce signal d'excitation. Lorsque le signal d'excitation émis par un premier transducteur E rencontre un ou plusieurs défauts de la structure STR, le signal de réception reçu par un second transducteur R ne correspond pas à ce signal d'excitation et est perturbé par rapport à ce signal d'excitation. De manière avantageuse, les premiers transducteurs E sont de type ultrasonore (par exemple de type piézo-électrique ou autre, notamment du type PZT i.e. à Titano-Zirconate de Plomb), et les seconds transducteurs R sont de type optique (par exemple en comportant un ou plusieurs réseau(x) de Bragg d'une ou plusieurs fibre(s) optique(s)).

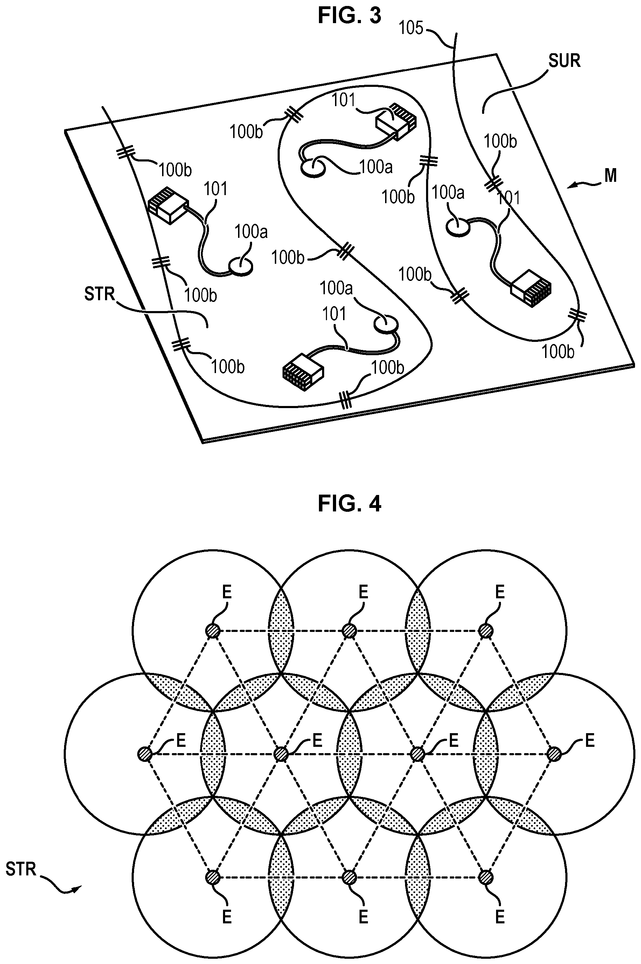

Chaque transducteur 100 peut comporter des moyens 101 de connexion à l'extérieur ainsi que représenté aux figures 2 et 3, ou sans fil. Il est également prévu avec les transducteurs 100 des alimentations et l'électronique nécessaires à leur mise en œuvre. Ces moyens 101 de connexion servant à envoyer le signal de commande et l'alimentation électrique depuis une unité extérieure 102 à chaque transducteur 100 et à envoyer les signaux de réception et/ou les signaux d'excitation à cette unité extérieure 102, ainsi que cela est représenté à la figure 1. Cette unité extérieure 102 est par exemple un module électronique et sert à l'acquisition des signaux émanant des transducteurs 100. Cette unité extérieure 102 peut comporter un superviseur ayant pour but de rapatrier les mesures (signaux de réception et signaux d'excitation) réalisées par les transducteurs 100

Les transducteurs 100 ont des positions connues ou prédéterminées par rapport à la structure STR. Les transducteurs 100 peuvent être disposés par exemple sur une même surface SUR de la structure STR, ainsi que représenté aux figures 2 et 3. La figure 2 représente des transducteurs 100a, 100b, positionnés à la surface SUR d'une structure STR formée d'un matériau composite monolithique de la structure de type IFS mentionnée ci-dessus. La figure 3 représente des transducteurs 100a, 100b positionnés à la surface SUR d'une structure STR formée d'un matériau composite de type sandwich à alvéoles en nid d'abeille de la structure de type IFS mentionnée ci-dessus. Sur les figures 2 et 3, les éléments 100a correspondent à des premiers transducteurs E de type ultrasonore (par exemple de type piézo-électrique ou autre, notamment du type PZT i.e. à Titano-Zirconate de Plomb), et les éléments 100b à des seconds transducteurs R de type optique qui comportent un ou plusieurs réseau(x) de Bragg 100b d'une ou plusieurs fibre(s) optique(s) 105. Plus précisément, comme visible sur ces figures, une ou plusieurs fibre(s) optique(s) 105 coure(nt) sur, ou dans, la structure STR, et compore(nt) une multitude de réseaux de Bragg 100b, lesquels sont placés de sorte à faire office de seconds transducteurs R.

Les transducteurs 100 peuvent également être disposés dans la structure STR, par exemple en appartenant à une surface SUR noyée à l'intérieur de la structure STR. La surface SUR peut être immatérielle, en ce qu'elle constitue le lieu géométrique regroupant l'ensemble des positions des transducteurs 100. La surface SUR peut également être matérielle, par exemple être constituée d'un film rapporté (par exemple par collage) sur la structure STR, ou noyée à l'intérieur de la structure STR. Alternativement, cette surface SUR matérielle peut former une nappe disposée entre deux feuilles successives de matériaux composites, avant ou après la cuisson desdits matériaux. En tout état de cause, la surface SUR peut ne pas constituer un plan à deux dimensions, par exemple lorsque la surface SUR épouse la forme particulière de la structure STR. Néanmoins, il est toujours possible de projeter la surface SUR, sur un plan horizontal à deux dimensions. De fait, lorsque la surface SUR est matérielle, les transducteurs 100 sont d'abord positionnés sur cette surface à plat (i.e. à deux dimensions), avant d'être intégré à la structure STR. Le positionnement particulier des transducteurs 100 dans le cadre de l'invention, qui va à présent être décrit, doit donc être entendu comme un positionnement sur le plan horizontal à deux dimensions, quelle que soit ensuite la position de la surface SUR dans l'espace lors de son intégration à la structure STR.

Le réseau formé de la pluralité de transducteurs 100 permet d'avoir une couverture optimale d'analyse de la structure STR, tout en utilisant un nombre minimal de transducteurs 100. La propagation des signaux d'excitation à partir d'un premier transducteur E est de type propagation d'onde en champ libre et omnidirectionnel. En outre, dans le cadre de l'invention, il est supposé que cette propagation est concentrique vis-à-vis des premiers transducteurs E. Chaque premier transducteur E émettant une onde mécanique qui se propage de manière uniforme, les seconds transducteurs R sont donc disposés de manière à être joignable par au moins un transducteur 100 en mode émission. Il existe ainsi un recouvrement entre deux cercles d'émission limitrophes, comme visible sur la figure 4. Afin de garantir la couverture optimale d'analyse avec un nombre minimal de transducteurs 100, dans un mode de réalisation privilégié du dispositif de détection 11 selon l'invention, la surface SUR est recouverte avec un nombre minimal de cercles d'émission E tout en garantissant un recouvrement minimal entre deux cercles limitrophes d'émission E.

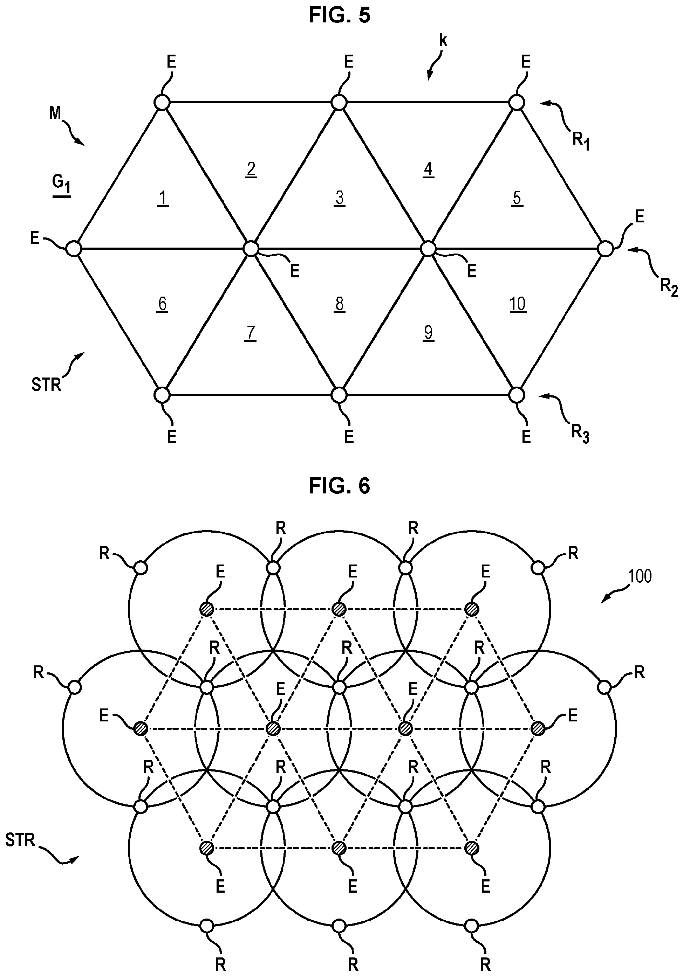

A cet égard, comme visible sur la figure 5, les premiers transducteurs E sont disposés pour délimiter entre eux plusieurs mailles M, selon un maillage hexagonal. Les premiers transducteurs E ne sont donc pas tous alignés entre eux. Les mailles M sont limitrophes entre elles. Les mailles M ont des positions connues par rapport à la structure STR. Les coins des mailles M sont formés par les premiers transducteurs E. Chaque maille M entoure une zone située entre trois premiers transducteurs E non alignés ou plus de trois premiers transducteurs E non alignés. Comme visible sur la figure 5, chaque maille M est délimitée par trois premiers transducteurs E non alignés et est donc triangulaire. Chaque maille M peut avoir une, deux, trois mailles, ou plus de trois mailles qui lui sont limitrophes. Les mailles M sont triangulaires équilatérales, de sorte à former le maillage hexagonal. Chaque sommet des mailles M triangulaires équilatérales correspond ainsi à la position d'un premier transducteur E. Par exemple, à la figure 5, on a représenté par des traits continus fictifs entre les premiers transducteurs E, les dix mailles 1, 2, 3, 4, 5, 6, 7, 8, 9, 10, qui sont équilatérales et limitrophes l'une à la suite de l'autre, et qui sont délimitées par une première rangée R1 de trois premiers transducteurs E alignés, une deuxième rangée R2 de quatre premiers transducteurs E alignés entre eux et non alignés avec la rangée R1 et une troisième rangée R3 de trois premiers transducteurs E alignés entre eux et non alignés avec les rangées R1 et R3.

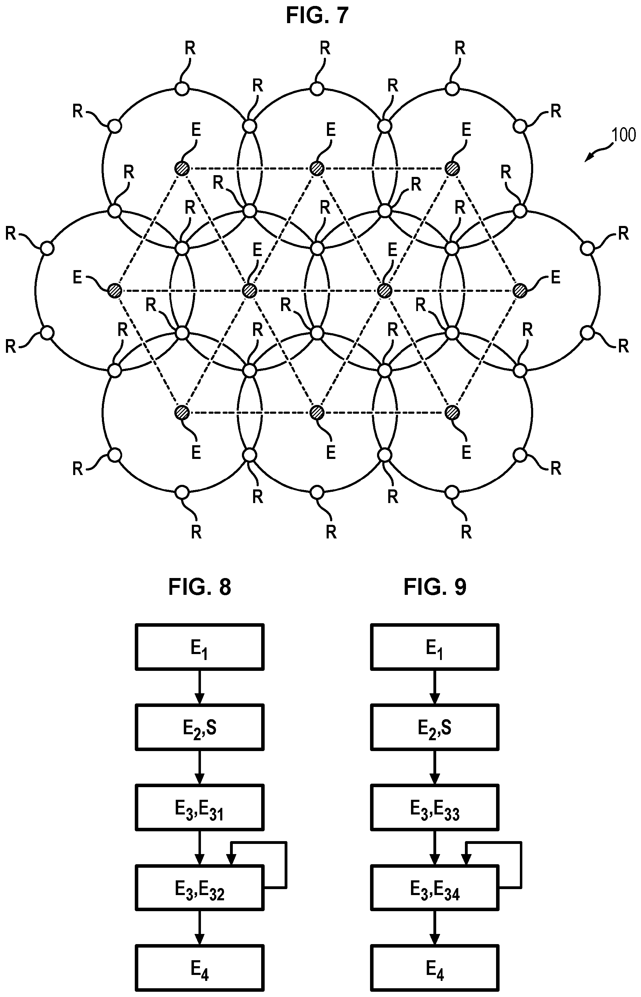

A partir de ce maillage hexagonal de la pluralité de premiers transducteurs E, différents modes de réalisation de positionnement de la pluralité de seconds transducteurs R, ont été illustres sur les figures 6 et 7. Sur la figure 6, chaque premier transducteur E est entouré par trois seconds transducteur R disposés sur un cercle d'émission centré sur le premier transducteur E. Sur la figure 7, on distingue six seconds transducteurs R par premier transducteur E. Avantageusement, la distance séparant deux premiers transducteurs est comprise entre 1 et 2 fois le rayon du cercle d'émission, de préférence comprise entre 1,5 et 2 fois ce rayon, par exemple 1,73 fois ce rayon.

Suivant un mode de réalisation de l'invention, dans une première étape E1 d'acquisition de mesures, chaque premier transducteur E émet un signal d'excitation, et les seconds transducteurs R qui l'entourent sur son cercle d'émission acquièrent des signaux de réception.

Dans une deuxième étape E2 de calcul, postérieure à la première étape E1 d'acquisition de mesures, on extrait ou on détermine, à partir des signaux d'excitation des premiers transducteurs 100 E et des signaux de réception des seconds transducteurs R, une signature S pour chacune des mailles M, par exemple par une unité 103 de calcul, reliée à l'unité 102 d'acquisition. Les signatures S peuvent par exemple être calculées par un outil de traitement du signal et d'analyses multivariées, par le fait que les signatures S sont extraites de matrices de mesures, calculées en fonction des signaux d'excitation et des signaux de réception. En outre, cette unité 103 de calcul met en œuvre l'algorithme décrit ci-dessous et peut être un module algorithmique de détection de défaut. L'unité de calcul 103 est automatique, telle que par exemple un ou plusieurs calculateur(s) et/ou un ou plusieurs ordinateur(s), et/ou un ou plusieurs processeur(s) et/ou un ou plusieurs serveur(s) et/ou une ou plusieurs machine(s), pouvant être programmées à l'avance par un programme informatique préenregistré. Les mailles M et/ou la position des mailles M par rapport à la structure STR et/ou la position des transducteurs 100 et/ou l'appartenance des transducteurs 100 aux mailles M sont calculées et/ou enregistrées et/ou préenregistrées dans l'unité 103 de calcul.

Dans une troisième étape E3 d'identification de défauts, postérieure à la deuxième étape E2 de calcul, on compare les signatures S entre elles. On identifie parmi les mailles M une ou plusieurs mailles M comme localisant un défaut de la structure STR, appelée maille défaillante (maille à l'état endommagé), lorsque la signature S de cette ou ces mailles est différente de plusieurs autres signatures de plusieurs autres mailles.

Suivant un mode de réalisation, la ou les mailles ayant été identifiées mailles défaillantes et leur position connue par rapport à la structure STR sont envoyées dans un signal d'indication à une interface 104 homme-machine pour être restitué à un utilisateur, au cours d'une quatrième étape E4 d'indication, postérieure à la troisième étape E3 d'identification de défauts. On fournit ainsi à l'utilisateur leur position connue des mailles défaillantes par rapport à la structure STR et donc la localisation des défauts ainsi détectés. L'interface 104 homme-machine permet par exemple l'utilisation par les équipes de maintenance. L'interface 104 homme-machine est par exemple connectée à l'unité 103 de calcul.

Le dispositif 11 de détection de défauts de la structure STR comporte par exemple les transducteurs 100, l'unité 103 de calcul, l'unité 102 d'acquisition et l'interface 104 homme-machine. Le dispositif 11 de détection met en œuvre le procédé de détection de défauts de la structure STR, notamment grâce à l'unité de calcul 103 qui met en œuvre les étapes d'extraction E2 et de comparaison E3.

On décrit ci-dessous un premier mode de réalisation, dit à vote majoritaire, de cette comparaison lors de la troisième étape E3 d'identification de défauts, en référence à la figure 8. La maille défaillante est identifiée comme ayant une signature S qui est différente des signatures S, qui sont égales entre elles ou similaires entre elles, d'au moins deux autres mailles. C'est au moins deux autres mailles, indépendamment l'une de l'autre, sont chacune limitrophes de la maille défaillante, et ce pour des raisons d'inertie thermique. La comparaison est par exemple faite dans plusieurs groupes de trois mailles ou plus de trois mailles, chaque groupe étant différent des autres groupes par au moins une maille. Chaque groupe comporte par exemple un nombre impair de mailles.

Suivant un mode de réalisation, on considère ci-dessous des groupes de trois mailles M. Suivant un mode de réalisation, on applique ainsi une identification des mailles défaillantes selon un critère de la majorité 2 sur 3. Il est considéré que la probabilité d'avoir deux mailles ayant le même défaut aux mêmes endroits est très faible. Bien entendu, chaque groupe de maille pourrait avoir plus de trois mailles M, notamment un nombre impair de mailles. Les mailles de chaque groupe sont limitrophes entre elles.

Chaque groupe est défini par successivement une première maille, une deuxième maille et une troisième maille limitrophes entre elles. Chaque groupe a donc une maille de départ, qui est la première maille. Par exemple, le cas d'un groupe de mailles limitrophes entre elles est le premier groupe G1 de trois mailles, défini par successivement la première maille 1, la deuxième maille 2, qui est limitrophe à la première maille 1, et la troisième maille 6, qui est limitrophe à la première maille 1 à la figure 4 ou à la deuxième maille.

Une première fonction d'identification de tout groupe de mailles défini par successivement une première maille, une deuxième maille et une troisième maille, limitrophes entre elles, est définie ci-dessous, en prenant l'exemple ci-dessous du premier groupe G1. La fonction d'identification peut être appliquée au premier groupe G1 et à tout groupe de mailles autre que le premier groupe G1, et donc à tout groupe de mailles pouvant être autres que la maille 1 et/ou que la maille 2 et/ou que la maille 6 du premier groupe G1.

Par la première fonction d'identification, la première maille 1, la deuxième maille 2 et la troisième maille 6 sont identifiées comme mailles 1, 2, 6 non défaillantes, lorsque les signatures S de ces mailles 1, 2, 6 sont égales.

Par la première fonction d'identification, lorsque la signature S de la première maille 1 est différente de la signature S de la deuxième maille 2 égale à la signature S de la troisième maille 6, la première maille 1 est identifiée comme maille défaillante.

Par la première fonction d'identification, lorsque la signature S de la première maille 1 est égale à la signature S de la deuxième maille 2 et est différente de la signature S de la troisième maille 6, la première maille 1 est identifiée comme maille non endommagée (ou maille en bonne santé) et la troisième maille 6 est identifiée comme maille suspecte.

La troisième étape E3 d'identification peut comporter une ou plusieurs première(s) sous-étape(s) E31 d'identification et une ou plusieurs deuxième(s) sous-étape(s) E32 d'identification.

Ainsi, dans la première sous-étape E31 d'identification, on applique la première fonction d'identification au premier groupe G1 de successivement les mailles 1, 2 et 6. Cette première sous-étape E31 d'identification est donc effectuée pour le premier groupe G1 ayant comme maille de départ la maille 1.

Suivant un mode de réalisation, dans la deuxième sous-étape E32 d'identification, postérieure à la première sous-étape E31 d'identification, l'on applique la première fonction d'identification à un autre groupe G2 de mailles ayant comme maille de départ la deuxième maille 2.

Par exemple, cet autre groupe G2 de mailles est défini par successivement la deuxième maille 2,

- puis la première maille 1, si la première maille 1 a été identifiée comme maille non défaillante, et une quatrième maille 3, qui est limitrophe à la maille de départ (maille 2 dans ce cas),
- puis une cinquième maille, qui est limitrophe ou non limitrophe à la première maille 1, si la première maille 1 a été identifiée comme maille défaillante, et la quatrième maille 3, qui est limitrophe à la maille de départ (maille 2 dans ce cas).

Suivant un mode de réalisation, la quatrième maille 3 et la cinquième maille 7 sont différentes de la troisième maille 6, qui est identifiée comme maille suspecte. Par exemple, la première maille 1, la deuxième maille 2, troisième maille 6, la quatrième maille 3 et la cinquième maille 7 sont distinctes entre elles. Par exemple, la cinquième maille, dans le cas où elle est non limitrophe à la première maille 1 peut être la maille 7.

Suivant un mode de réalisation, l'on réitère la deuxième sous-étape E32 d'identification une ou plusieurs fois sur respectivement un ou plusieurs autres groupes de mailles. Les mailles de départ des deuxièmes sous-étapes E32 d'identification successives peuvent être différentes entre elles.

Suivant un mode de réalisation, la maille de départ de chaque deuxième sous-étape E32 d'identification est limitrophe à la maille de départ de la deuxième sous-étape E32 d'identification la précédant. On effectue ainsi l'identification sur des groupes de proche en proche.

Suivant un mode de réalisation, les mailles de chaque groupe sont autres qu'une maille ayant été identifiée comme maille défaillante.

Suivant un mode de réalisation, par exemple, l'on applique la première fonction d'identification à un autre groupe G3 de mailles ayant comme maille de départ la quatrième maille 3, limitrophe à la deuxième maille 2.

Par exemple, cet autre groupe G3 de mailles est défini par successivement la quatrième maille 3,

- une septième maille, qui est limitrophe ou non limitrophe à la maille de départ et qui n'a pas été identifiée comme maille défaillante, et une huitième maille, qui est limitrophe ou non limitrophe à la maille de départ,
- une septième maille, qui est limitrophe ou non limitrophe à la maille de départ, si la deuxième maille (2) a été identifiée comme maille non défaillante, et une huitième maille, qui est limitrophe ou non limitrophe à la maille de départ.

La septième maille peut être limitrophe à la maille de départ (quatrième maille 3) et être la maille 4 ou la maille 2, si la maille 2 n'a pas été identifié comme maille défaillante. La huitième maille peut être limitrophe à la maille de départ (quatrième maille 3) et être la maille 8 ou la maille 2. Une manière de faire ce choix peut être celui de choisir les deux mailles qui ont été le moins utilisées au moment de l'analyse, afin de limiter le risque d'erreur.

Suivant un mode de réalisation, pour la troisième maille 6 ou chaque maille, qui est identifiée comme maille suspecte, on applique une deuxième fonction d'identification définie de la manière suivante.

Lorsque la signature de la troisième maille 6 ou maille suspecte est différente de la signature de la première maille 1 égale à la signature d'une sixième maille 7 limitrophe à la troisième maille 6 ou maille suspecte, la troisième maille 6 ou maille suspecte est identifiée comme maille défaillante.

Lorsque la signature de la troisième maille 6 ou maille suspecte est différente de la signature de la première maille 1 différente de la signature de la sixième maille 7, la troisième maille 6 ou maille suspecte est identifiée comme maille défaillante et la sixième maille 7 est identifiée comme maille suspecte.

Lorsque la signature de la troisième maille 6 ou maille suspecte est égale à la signature de la sixième maille 7, un deuxième signal d'indication est envoyé sur l'interface homme-machine 104, par exemple pour demander une décision de l'utilisateur, ce cas survenant toutefois rarement.

Lorsque la maille suspecte (par exemple 6) est limitrophe à une maille identifiée comme maille défaillante (par exemple 1), on applique la deuxième sous-étape E32 d'identification, la première sous-étape E31 d'identification et/ou la deuxième fonction d'identification à une autre maille (par exemple 7) limitrophe à la maille suspecte.

Suivant un mode de réalisation, on applique la deuxième sous-étape E32 d'identification, la première fonction d'identification et/ou la deuxième fonction d'identification pour que la maille de départ soit tour à tour chacune des mailles, sans être une maille ayant été identifiée comme maille défaillante.

On décrit ci-dessous un deuxième mode de réalisation, dit à classification de populations, de cette comparaison lors de la troisième étape E3 d'identification de défauts, en référence à la figure 9.

La troisième étape E3 d'identification peut comporter une ou plusieurs troisième(s) sous-étape(s) E33 de classification et une ou plusieurs quatrième(s) sous-étape(s) E34 de classification.

Au cours de la troisième(s) sous-étape(s) E33 de classification, l'on classifie les mailles M ayant la même signature dans une même famille respective F.

Les mailles M, qui sont classifiées dans la famille respective F ayant le plus grand nombre de mailles, appelée famille saine, sont identifiées comme mailles non défaillantes.

Chaque maille M, qui est classifiée dans une famille respective F n'ayant qu'une seule maille M, appelée famille défaillante respective, est identifiée comme maille défaillante.

Il est peu probable d'avoir le même type de défaut sur plusieurs mailles, et il est donc considéré que la population avec le plus d'individus est une population de mailles en bon état, tandis que nous considérons que toutes les populations n'ayant qu'un seul individu sont des populations de maille défaillante.

Suivant un mode de réalisation, dans la phase de construction des populations, on classifie chaque maille de la structure dans une famille afin de pouvoir par la suite analyser les familles et d'en déduire s'il y a des familles défaillantes. Chaque population est définie par une référence.

Suivant un mode de réalisation, pour classifier les mailles, on classifie une première maille 1 ayant une première signature S1 dans une première famille F1, à laquelle on attribue une référence respective égale à la première signature S1. On définit ainsi la référence pour la première population, dont le nombre d'individu est égal à 1 (pour la première maille 1).

Puis successivement pour chaque autre maille k (par exemple maille 2, 3, 4, 5, 6, 7, 8, 9, 10), différente de la première maille 1, on itère la quatrième sous-étape E34 de classification décrite ci-dessous.

On compare la signature S2 de l'autre maille k à la référence respective de chaque famille F (dont la famille F1), par exemple en comparant successivement la signature S2 de l'autre maille k à la référence respective des familles Fj l'une après l'autre.

Si la signature S2 de l'autre maille k est égale à la référence respective de l'une Fj des familles F, alors cette autre maille k est classifiée dans cette famille Fj. Ainsi, dans ce cas, le nombre d'individus de de la famille Fj est incrémenté de 1. Si la signature S2 de l'autre maille k n'est pas égale à la référence respective de la famille Fj, alors on effectue la comparaison de la signature S2 de l'autre maille k à la référence respective de la famille suivante Fj, avec j incrémenté de 1.

Si la signature S2 de l'autre maille n'est égale à aucune référence respective des familles F, Fj, alors cette autre maille k est classifiée dans une nouvelle famille F2, à laquelle on attribue une référence respective égale à la signature de cette autre maille k. Ainsi, dans ce cas, le nombre d'individus de nouvelle famille F2 est égal à 1.

On passe ensuite à la maille suivante, sur laquelle on effectue la quatrième sous-étape E34 de classification.

Cette itération est effectuée, tant qu'il y a une ou plusieurs mailles non encore classifiées dans une famille F.

Suivant un mode de réalisation, on détermine, par calcul de distances, si la famille en cours d'analyse est plus proche de la famille saine ou d'une famille défaillante.

Suivant un mode de réalisation, on classifie chaque maille n'appartenant ni à la famille saine, ni à la ou aux familles défaillantes respectives, appelée maille à analyser, dans une famille à analyser.

Suivant un mode de réalisation, pour chaque maille à analyser de la famille à analyser, on calcule une première distance entre la signature de la maille à analyser et la signature des mailles de la famille saine, et une deuxième distance respective entre la signature de la maille à analyser et la signature des mailles de chaque famille défaillante respective.

Lorsque la première distance est inférieure à chaque deuxième distance respective, on classifie la maille à analyser dans la famille saine ou on identifie la maille à analyser comme maille non défaillante.

Lorsque la première distance est supérieure à une ou plusieurs deuxièmes distances respectives, on classifie la maille à analyser dans la famille défaillante ayant cette deuxième distance respective ou on identifie la maille à analyser comme maille défaillante.

Suivant un mode de réalisation, en SHM, les distances calculées sont appelées indicateurs de défauts. Suivant un mode de réalisation, l'indicateur proposé est calculé par le biais d'une méthode d'extraction basée sur l'analyse multivariée. Les détails du calcul de cet indicateur sont décrits dans la suite du présent document.

Par exemple, pour toutes les familles ayant 2 ou plusieurs individus (mailles), mais qui ne sont pas la population ayant le plus de mailles, un indicateur est calculé entre les populations principales et celle ayant un seul individu.

On effectue ensuite l'étape E4 d'indication, décrite ci-dessus.

Comparé au premier mode de réalisation, ce deuxième mode de réalisation permet de d'avoir un nombre limité de mailles ayant le même défaut et donc de pallier le problème du vote majoritaire 2 sur 3 avec 2 mailles défaillantes et une maille non défaillante.

Suivant un mode de réalisation, une longueur d'onde d'interrogation (du signal d'excitation) est inférieure à la distance entre les transducteurs d'une même maille.

On décrit ci-dessous un mode de réalisation de l'extraction de caractéristiques.

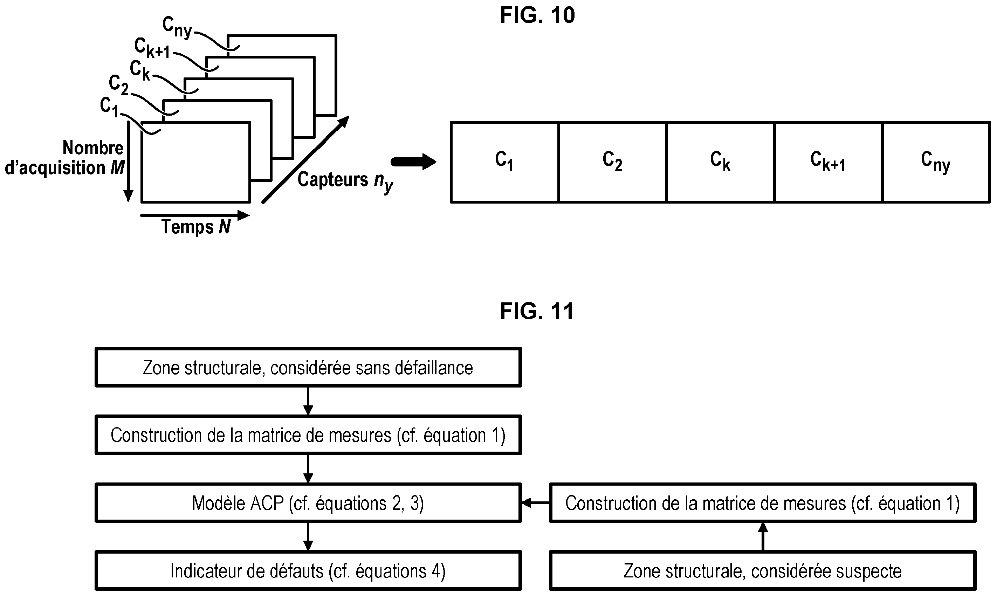

Soit $\mathbf{Y}_s(k) \in \mathbb{R}^{M \times n_y}$, la matrice émanant d'une zone structurale considérée sans défaillance (cf. Figure 10, représentant la structuration de la matrice de mesures) :

$$\mathbf{Y}_s(k) = \begin{bmatrix} y_{11} & \cdots & y_{1i} & \cdots & y_{1n_y} \\ \cdots & \cdots & \cdots & \cdots & \cdots \\ y_{m1} & \cdots & y_{mi} & \cdots & y_{mn_y} \\ \cdots & \cdots & \cdots & \cdots & \cdots \\ y_{M1} & \cdots & y_{Mi} & \cdots & y_{Mn_y} \end{bmatrix} \tag{1}$$

où :

$n_y$ est le nombre de capteurs ou transducteurs C1, C2, ... Ck, Ck+1, ... Cny instrumentés sur la zone,
$M$ est le nombre d'acquisitions établies pour interroger la zone,
$k$ est le temps discret.

La définition de la zone sans défaillance est dans notre cas liée soit au vote majoritaire, soit à une plus forte densité de population, selon les algorithmes décrits précédemment.

L'extraction des caractéristiques de l'état de santé est établie à travers une méthode d'analyse multivariée, par exemple, l'analyse en composantes principales (ACP). Cette méthode permet de transformer des variables liées entre elles (dites corrélées) en de nouvelles variables décorrélées les unes des autres, par exemple selon le document [1] Tibaduiza, D.A et al (2015). "Structural damage detection using principal component analysis and damage indices". Journal of Intelligent Material Systems and Structures.

Mathématiquement parlant, l'ACP est basée sur une décomposition en valeurs et vecteurs propres de la matrice de mesures (cf. équation 1), permettant ainsi d'obtenir un espace principal et résiduel, définis par les équations suivantes :

$$\Lambda_{\Sigma_{\underline{y}}} = \begin{bmatrix} \hat{\Lambda}_{n_r \times n_r} & \mathbf{0} \\ \mathbf{0} & \widetilde{\Lambda}_{(M-n_r) \times (M-n_r)} \end{bmatrix} \qquad (2)$$

$$\mathbf{P} = \begin{bmatrix} \hat{\mathbf{P}}_{M \times n_r} & \tilde{\mathbf{P}}_{M \times (M-n_r)} \end{bmatrix} \qquad (3)$$

où :

Les matrices $\hat{\Lambda}$, $\hat{P}$ sont appelées matrices des valeurs propres, des vecteurs propres, associées à l'espace principal.
Les matrices $\tilde{\Lambda}$, $\hat{P}$ sont appelées matrices des valeurs propres, vecteurs propres, associées à l'espace résiduel.

On décrit ci-dessous un mode de réalisation de l'indicateur de défauts.

Considérons maintenant, la matrice émanant d'une autre zone structurale considérée suspecte, et associons à cette zone, une matrice de mesures notée $Y_{ii}$, construite de la même manière que le schéma de la Figure 10 et selon l'équation (1).

Une zone considérée suspecte est une zone ayant un indicateur différent de celui de la zone considérée en bonne santé.

Pour établir l'indicateur de défauts nécessaire à la prise de décision de l'état de santé, la matrice $\boldsymbol{Y_{ii}}$ est projetée dans le modèle ACP (selon les équations (2) et (3)) établie sur la zone considérée sans défaillance. L'indicateur de défaut noté DI est défini par l'équation suivante :

$$\mathbf{E} = \begin{bmatrix} \mathbf{Y}_{ii}(k)(\mathbf{I} - \hat{\mathbf{P}}\hat{\mathbf{P}}^T) \end{bmatrix} \qquad (4)$$

$$\mathrm{DI}_i = \mathbf{E}_i \mathbf{E}_i^T \qquad (5)$$

où i correspond au numéro de l'acquisition établie pour interroger la structure.

La Figure 11 illustre un schéma de principe du calcul de l'indicateur de défauts.

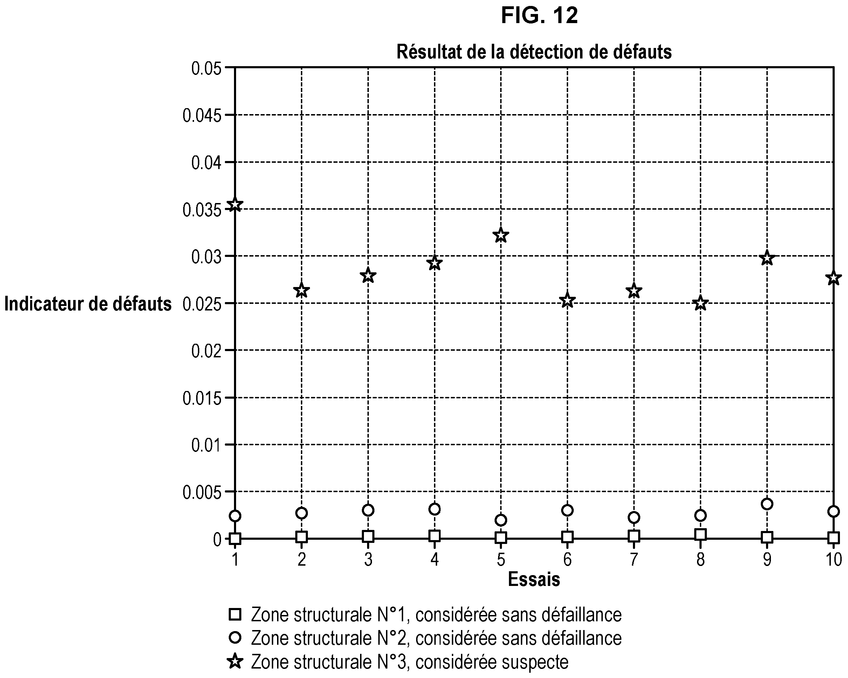

La Figure 12 illustre l'application du vote majoritaire à l'indicateur de défauts. Par comparaison, nous pouvons constater que l'indicateur issu de la zone N°3 est plus important que celui issu de la zone N°1 et N°2, indiquant ainsi qu'une défaillance est présente dans la zone N°3.

**Revendications**

**1.** Procédé de détection de défauts d'une structure (STR), au moyen d'un dispositif (11) de détection de défauts d'une structure (STR), le dispositif (11) comprenant une unité de calcul (103) et une pluralité de transducteurs (100) destinés à être positionnés sur ou dans la structure (STR),

- des premiers transducteurs (E) de la pluralité de transducteurs (100) étant aptes à être dans un mode d'émission où ils émettent un signal d'excitation,
- des seconds transducteurs (R) de la pluralité de transducteurs (100) étant aptes à être dans un mode de réception où ils reçoivent un signal de réception en réponse au signal d'excitation émis par un premier transducteur (E) en mode émission, les signaux d'excitation et les signaux de réception étant aptes à se propager le long de la structure (STR) ou dans la structure (STR),
les premiers transducteurs (E) formant un maillage hexagonal de sorte à délimiter entre eux plusieurs mailles (M) limitrophes entre elles, les seconds transducteurs (R) étant disposés sur des cercles d'émission respectifs des premiers transducteurs (E), chaque cercle d'émission d'un premier transducteur (E) étant centré sur le premier transducteur (E), un maillage constitué d'une pluralité de mailles (M) et défini par la pluralité de transducteurs (100) ayant été préalablement disposé sur ou dans la structure (STR), le procédé comprenant les étapes de :

- extraction, (E2) en fonction de signaux d'excitation émis (E1) par les premiers transducteurs (E), et des signaux de réception reçus (E1) par les seconds transducteurs (R), d'une signature (S) pour chacune des mailles (M),
- comparaison (E3) des signatures (S) entre elles pour identifier parmi les mailles (M) au moins une maille comme localisant un défaut de la structure (STR), appelée maille défaillante, lorsque la signature (S) de cette maille (M) est différente de plusieurs autres signatures (S) de plusieurs autres mailles (M),

les étapes d'extraction (E2) et de comparaison (E3) étant mises en œuvre par l'unité de calcul (103),
les mailles (M) étant triangulaires équilatérales dont chaque sommet correspond à la position d'un premier transducteur (E),
le positionnement des transducteurs étant entendu comme un positionnement de leur projection sur un plan horizontal à deux dimensions.

2. Procédé de détection de défauts d'une structure (STR) selon la revendication 1, dans lequel les premiers transducteurs (E) sont des capteurs piézoélectriques (110a), et les seconds transducteurs (R) comprennent chacun un réseau de Bragg (100b) d'une fibre optique (105).

3. Procédé de détection de défauts d'une structure (STR) selon l'une des revendications 1 et 2, dans lequel la distance séparant deux premiers transducteurs (E) au sein du maillage est 1,73 fois le rayon de chaque cercle d'émission.

4. Procédé de détection de défauts d'une structure (STR) selon l'une des revendications 1 à 3, dans lequel la maille défaillante est identifiée comme ayant une signature qui est différente des signatures, qui sont égales entre elles, d'au moins deux autres mailles (M), chacune indépendamment limitrophe de la maille défaillante.

5. Procédé de détection de défauts d'une structure (STR) selon l'une des revendications 1 à 4, dans lequel une première fonction d'identification d'un groupe défini par successivement une première maille (1), une deuxième maille (2) et une troisième maille (6), est en outre définie par le fait que :

- la première maille (1), la deuxième maille (2) et la troisième maille (6) sont identifiées comme mailles (1, 2, 6) non défaillantes, lorsque les signatures de ces mailles (1, 2, 6) sont égales,
- lorsque la signature de la première maille (1) est différente de la signature de la deuxième maille (2) égale à la signature de la troisième maille (6), la première maille (1) est identifiée comme maille défaillante,
- lorsque la signature de la première maille (1) est égale à la signature de la deuxième maille (2) et est différente de la signature de la troisième maille (6), la première maille (1) est identifiée comme maille non défaillante et la troisième maille (6) est identifiée comme maille suspecte,
- dans une première sous-étape (E31) d'identification, on applique la première fonction d'identification à un premier groupe de trois mailles (1, 2, 6), comportant successivement une première maille (1), une deuxième maille (2), qui est limitrophe à la première maille (1), et une troisième maille (6), qui est limitrophe à la première maille (1).

6. Procédé de détection de défauts d'une structure (STR) selon la revendication 5, dans lequel, dans une deuxième sous-étape (E32) d'identification postérieure à la première sous-étape (E31) d'identification, l'on applique la première fonction d'identification à un autre groupe de mailles défini par successivement une maille de départ formée par la deuxième maille (2) et :

- la première maille (1), si la première maille (1) a été identifiée comme maille non défaillante, et une quatrième maille (3), qui est limitrophe à la maille de départ,

- une cinquième maille (7), qui est limitrophe ou non limitrophe à la première maille (1), si la première maille (1) a été identifiée comme maille défaillante, et la quatrième maille (3), qui est limitrophe à la maille de départ.

7. Procédé de détection de défauts d'une structure (STR) selon la revendication 6, dans lequel on réitère la deuxième sous-étape (E32) d'identification une ou plusieurs fois sur respectivement un ou plusieurs autres groupes de mailles.

8. Procédé de détection de défauts d'une structure (STR) selon la revendication 7, dans lequel la maille de départ de chaque deuxième sous-étape (E32) d'identification est limitrophe à la maille de départ de la deuxième sous-étape (E32) d'identification la précédant.

9. Procédé de détection de défauts d'une structure (STR) selon l'une quelconque des revendications 6 à 8, dans lequel la quatrième maille (3) et la cinquième maille (7) sont différentes de la troisième maille (6), qui est identifiée comme maille suspecte.

10. Procédé de détection de défauts d'une structure (STR) selon l'une quelconque des revendications 5 à 9, dans lequel les mailles de chaque groupe sont autres qu'une maille ayant été identifiée comme maille défaillante.

11. Procédé de détection de défauts d'une structure (STR) selon l'une quelconque des revendications 5 à 10, dans lequel, pour la troisième maille (6), qui est identifiée comme maille suspecte, on applique une deuxième fonction d'identification définie par le fait que :

   - lorsque la signature de la troisième maille (6) est différente de la signature de la première maille (1) égale à la signature d'une sixième maille (7) limitrophe à la troisième maille (6), la troisième maille (6) est identifiée comme maille défaillante,
   - lorsque la signature de la troisième maille (6) est différente de la signature de la première maille (1) différente de la signature de la sixième maille (7), la troisième maille (6) est identifiée comme maille défaillante et la sixième maille (7) est identifiée comme maille suspecte,
   - lorsque la signature de la troisième maille (6) est égale à la signature de la sixième maille (7), un premier signal d'indication est envoyé sur une interface (104) homme-machine.

12. Procédé de détection de défauts d'une structure (STR) selon l'une des revendications 1 à 3, dans lequel, au cours d'au moins une sous-étape (E33, E34) de classification, on classifie les mailles (M) ayant la même signature dans une même famille respective :

   - les mailles (M), qui sont classifiées dans la famille respective ayant le plus grand nombre de mailles, appelée famille saine, étant identifiées comme mailles non défaillantes,
   - chaque maille (M), qui est classifiée dans une famille respective n'ayant qu'une seule maille, appelée famille défaillante respective, étant identifiée comme maille défaillante.

13. Procédé de détection de défauts d'une structure (STR) selon la revendication 12, dans lequel, pour classifier les mailles (M) :

   - on classifie une première maille (1) ayant une première signature (S1) dans une première famille (F), à laquelle on attribue une référence respective égale à la première signature (S1),
   - puis successivement pour chaque autre maille (k), différente de la première maille (1), on itère la sous-étape (E34) de classification selon laquelle

      ◦ on compare la signature (S2) de l'autre maille (k) à la référence respective de chaque famille (F1),
      ◦ si la signature (S2) de l'autre maille (k) est égale à la référence respective de l'une (Fj) des familles (F), alors cette autre maille (k) est classifiée dans cette famille (Fj),
      ◦ si la signature (S2) de l'autre maille (k) n'est égale à aucune référence respective des familles (F), alors cette autre maille (k) est classifiée dans une nouvelle famille (F2), à laquelle on attribue une référence respective égale à la signature (S2) de cette autre maille (k).

14. Procédé de détection de défauts d'une structure (STR) selon la revendication 12 ou 13, dans lequel :

   - pour chaque maille n'appartenant ni à la famille saine, ni à la ou aux familles défaillantes respectives, appelée maille à analyser, on calcule une première distance entre la signature de la maille à analyser et la signature des mailles de la famille saine, et une deuxième distance respective entre la signature de la maille à analyser et la signature des mailles de chaque famille défaillante respective, pour :

◦ lorsque la première distance est inférieure à chaque deuxième distance respective, classifier la maille à analyser dans la famille saine ou identifier la maille à analyser comme maille non défaillante,
◦ lorsque la première distance est supérieure à une ou plusieurs deuxièmes distances respectives, classifier la maille à analyser dans la famille défaillante ayant cette deuxième distance respective ou identifier la maille à analyser comme maille défaillante.

**Patentansprüche**

1. Verfahren zum Erkennen von Fehlern einer Struktur (STR) mittels einer Vorrichtung (11) zum Erkennen von Fehlern einer Struktur (STR), wobei die Vorrichtung (11) eine Recheneinheit (103) und eine Vielzahl von Wandlern (100) zur Positionierung auf oder in der Struktur (STR) umfasst, wobei

- erste Wandler (E) der Vielzahl von Wandlern (100) geeignet sind, sich in einem Sendemodus zu befinden, in dem sie ein Anregungssignal aussenden,
- zweite Wandler (R) der Vielzahl von Wandlern (100) geeignet sind, in einem Empfangsmodus zu sein, in dem sie ein Empfangssignal als Reaktion auf das Anregungssignal empfangen, das von einem ersten Wandler (E) im Sendemodus gesendet wird, wobei die Anregungssignale und die Empfangssignale geeignet sind, sich entlang der Struktur (STR) oder in der Struktur (STR) auszubreiten,
wobei die ersten Wandler (E) ein hexagonales Netz bilden, so dass zwischen ihnen mehrere aneinander grenzende Maschen (M) abgegrenzt werden, wobei die zweiten Wandler (R) auf jeweiligen Sendekreisen der ersten Wandler (E) angeordnet sind, wobei jeder Sendekreis eines ersten Wandlers (E) auf den ersten Wandler (E) zentriert ist, wobei ein Gitter, das aus einer Vielzahl von Maschen (M) besteht und durch die Vielzahl von Wandlern (100) definiert ist, zuvor auf oder in der Struktur (STR) angeordnet wurde, wobei das Verfahren die folgenden Schritte umfasst:

- Extrahieren, (E2) in Abhängigkeit von Erregungssignalen, die von den ersten Wandlern (E) gesendet werden (E1), und von Empfangssignalen, die von den zweiten Wandlern (R) empfangen werden (E1), einer Signatur (S) für jedes der Maschen (M),
- Vergleich (E3) der Signaturen (S) untereinander, um unter den Maschen (M) mindestens eine Masche als einen Fehler der Struktur (STR) lokalisierend zu identifizieren, die als fehlerbehaftete Masche bezeichnet wird, wenn die Signatur (S) dieser Masche (M) sich von mehreren anderen Signaturen (S) mehrerer anderer Maschen (M) unterscheidet,

wobei die Schritte des Extrahierens (E2) und des Vergleichs (E3) von der Recheneinheit (103) implementiert werden,
wobei die Maschen (M) gleichseitige Dreiecke sind, von denen jeder Scheitelpunkt der Position eines ersten Wandlers (E) entspricht,
wobei die Positionierung der Wandler als eine Positionierung ihrer Projektion auf einer zweidimensionalen horizontalen Ebene verstanden wird.

2. Verfahren zum Erkennen von Fehlern in einer Struktur (STR) nach Anspruch 1, wobei die ersten Wandler (E) piezoelektrische Sensoren (110a) sind und die zweiten Wandler (R) jeweils ein Bragg-Gitter (100b) einer optischen Faser (105) umfassen.

3. Verfahren zum Erkennen von Fehlern einer Struktur (STR) nach einem der Ansprüche 1 oder 2, wobei der Abstand zwischen zwei ersten Wandlern (E) innerhalb des Gitters das 1,73-fache des Radius jedes Sendekreises beträgt.

4. Verfahren zum Erkennen von Fehlern einer Struktur (STR) nach einem der Ansprüche 1 bis 3, wobei die fehlerbehaftete Masche als eine solche identifiziert wird, die eine Signatur hat, die sich von den Signaturen, die untereinander gleich sind, von mindestens zwei anderen Maschen (M) unterscheidet, die jeweils unabhängig an die fehlerbehaftete Masche angrenzen.

5. Verfahren zum Erkennen von Fehlern einer Struktur (STR) nach einem der Ansprüche 1 bis 4, wobei eine erste Funktion zum Identifizieren einer Gruppe, die nacheinander durch eine erste Masche (1), eine zweite Masche (2) und eine dritte Masche (6) definiert ist, außerdem dadurch definiert ist, dass :

- die erste Masche (1), die zweite Masche (2) und die dritte Masche (6) als nicht fehlerbehaftete Maschen (1, 2, 6) identifiziert werden, wenn die Signaturen dieser Maschen (1, 2, 6) gleich sind,
- wenn die Signatur der ersten Masche (1) sich von der Signatur der zweiten Masche (2), die gleich der Signatur der dritten Masche (6) ist, unterscheidet, wird die erste Masche (1) als fehlerbehaftete Masche identifiziert,
- wenn die Signatur der ersten Masche (1) gleich der Signatur der zweiten Masche (2) ist und sich von der Signatur der dritten Masche (6) unterscheidet, die erste Masche (1) als nicht fehlerbehaftete Masche identifiziert wird und die dritte Masche (6) als verdächtige Masche identifiziert wird,
- in einem ersten Identifikationsunterschritt (E31) die erste Identifikationsfunktion auf eine erste Gruppe von drei Maschen (1, 2, 6) angewendet wird, die nacheinander eine erste Masche (1), eine zweite Masche (2), die an die erste Masche (1) angrenzt, und eine dritte Masche (6), die an die erste Masche (1) angrenzt, umfasst.

6. Verfahren zum Erkennen von Fehlern einer Struktur (STR) nach Anspruch 5, bei dem in einem zweiten Identifikations-Unterschritt (E32), der dem ersten Identifikations-Unterschritt (E31) nachfolgt, die erste Identifikationsfunktion auf eine andere Gruppe von Maschen angewendet wird, die nacheinander durch eine Ausgangsmasche definiert wird, die durch die zweite Masche (2) und durch

- die erste Masche (1), wenn die erste Masche (1) als nicht fehlerbehaftete Masche identifiziert wurde, und eine vierte Masche (3), die an die Ausgangsmasche angrenzt,
- eine fünfte Masche (7), die an die erste Masche (1) angrenzt oder nicht an sie angrenzt, wenn die erste Masche (1) als fehlerbehaftete Masche identifiziert wurde, und die vierte Masche (3), die an die Ausgangsmasche angrenzt,

gebildet ist.

7. Verfahren zum Erkennen von Fehlern einer Struktur (STR) nach Anspruch 6, bei dem der zweite Unterschritt (E32) der Identifizierung ein- oder mehrmals an jeweils einer oder mehreren anderen Gruppen von Maschen wiederholt wird.

8. Verfahren zum Erkennen von Fehlern einer Struktur (STR) nach Anspruch 7, wobei die Ausgangsmasche jedes zweiten Identifikationsunterschrittes (E32) an die Ausgangsmasche des ihm vorangehenden zweiten Identifikationsunterschrittes (E32) angrenzt.

9. Verfahren zum Erkennen von Fehlern einer Struktur (STR) nach einem der Ansprüche 6 bis 8, wobei sich die vierte Masche (3) und die fünfte Masche (7) von der dritten Masche (6) unterscheiden, die als verdächtige Masche identifiziert wird.

10. Verfahren zum Erkennen von Fehlern einer Struktur (STR) nach einem der Ansprüche 5 bis 9, wobei die Maschen in jeder Gruppe von einer Masche verschieden sind, die als fehlerbehaftete Masche identifiziert wurde.

11. Verfahren zum Erkennen von Fehlern einer Struktur (STR) nach einem der Ansprüche 5 bis 10, wobei für die dritte Masche (6), die als verdächtige Masche identifiziert wird, eine zweite Identifikationsfunktion angewendet wird, die dadurch definiert ist, dass :

- wenn die Signatur der dritten Masche (6) sich von der Signatur der ersten Masche (1) unterscheidet, die gleich der Signatur einer sechsten Masche (7) ist, die an die dritte Masche (6) angrenzt, wird die dritte Masche (6) als fehlerbehaftete Masche identifiziert,
- wenn die Signatur der dritten Masche (6) von der Signatur der ersten Masche (1) verschieden ist, die von der Signatur der sechsten Masche (7) verschieden ist, wird die dritte Masche (6) als fehlerbehaftete Masche identifiziert und wird die sechste Masche (7) als verdächtige Masche identifiziert,
- wenn die Signatur der dritten Masche (6) gleich der Signatur der sechsten Masche (7) ist, wird ein erstes Hinweissignal an eine Mensch-Maschine-Schnittstelle (104) gesendet.

12. Verfahren zum Erkennen von Fehlern einer Struktur (STR) nach einem der Ansprüche 1 bis 3, bei dem in mindestens einem Unterschritt (E33, E34) der Klassifizierung die Maschen (M) mit derselben Signatur in eine jeweilige Familie klassifiziert werden :

- die Maschen (M), die in die jeweilige Familie mit der größten Anzahl von Maschen, die als gesunde Familie bezeichnet wird, klassifiziert werden, als nicht versagende Maschen identifiziert werden,
- jede Masche (M), die in einer jeweiligen Familie mit nur einer Masche klassifiziert wird, die als jeweilige fehlerbehaftete Familie bezeichnet wird, als fehlerbehaftete Masche identifiziert wird.

**13.** Verfahren zum Erkennen von Fehlern einer Struktur (STR) nach Anspruch 12, wobei zur Klassifizierung der Maschen (M) :

- eine erste Masche (1) mit einer ersten Signatur (S1) in einer ersten Familie (F1) klassifiziert wird, der eine jeweilige Referenz gleich der ersten Signatur (S1) zugewiesen wird,
- dann nacheinander für jede andere Masche (k), die sich von der ersten Masche (1) unterscheidet, der Unterschritt (E34) der Klassifizierung iteriert wird, gemäß dem

  ◦ die Signatur (S2) der anderen Masche (k) mit der jeweiligen Referenz jeder Familie (F1) verglichen wird,
  ◦ wenn die Signatur (S2) der anderen Masche (k) gleich der jeweiligen Referenz einer (Fj) der Familien (F) ist, dann wird diese andere Masche (k) in diese Familie (Fj) klassifiziert,
  ◦ wenn die Signatur (S2) der anderen Masche (k) gleich keiner jeweiligen Referenz der Familien (F) ist, dann wird diese andere Masche (k) in eine neue Familie (F2) klassifiziert, der eine jeweilige Referenz gleich der Signatur (S2) dieser anderen Masche (k) zugewiesen wird.

**14.** Verfahren zum Erkennen von Fehlern einer Struktur (STR) nach Anspruch 12 oder 13, wobei :

- für jede Masche, die weder zu der gesunden Familie noch zu der/den jeweiligen fehlerbehafteten Familie(n) gehört und als zu analysierende Masche bezeichnet wird, ein erster Abstand zwischen der Signatur der zu analysierenden Masche und der Signatur der Maschen der gesunden Familie und ein zweiter jeweiliger Abstand zwischen der Signatur der zu analysierenden Masche und der Signatur der Maschen jeder jeweiligen fehlerbehafteten Familie berechnet wird, um :

  ◦ wenn der erste Abstand kleiner als jeder jeweilige zweite Abstand ist, die zu analysierende Masche in die gesunde Familie zu klassifizieren oder die zu analysierende Masche als nicht fehlerbehaftete Masche zu identifizieren,
  ◦ wenn der erste Abstand größer ist als ein oder mehrere jeweilige zweite Abstände, die zu analysierende Masche in die fehlerbehaftete Familie mit diesem jeweiligen zweiten Abstand zu klassifizieren oder die zu analysierende Masche als fehlerbehaftete Masche zu identifizieren.

**Claims**

**1.** A method for detecting faults of a structure (STR), by means of a device (11) for detecting faults of a structure (STR), the device (11) comprising a calculation unit (103) and a plurality of transducers (100) intended to be positioned on or in the structure (STR),

- first transducers (E) of the plurality of transducers (100) being capable of being in an emission mode where they emit an excitation signal,
- second transducers (R) of the plurality of the transducers (100) being capable of being in a reception mode where they receive a reception signal in response to the excitation signal emitted by a first transducer (E) in the emission mode, the excitation signals and the reception signals being capable of propagating along the structure (STR) or in the structure (STR),
the first transducers (E) forming a hexagonal meshing so as to delimit between them several mutually adjacent mesh cells (M), the second transducers (R) being positioned on respective emission circles of the first transducers (E), each emission circle of a first transducer (E) being centered on the first transducer (E), a meshing consisting of a plurality of mesh cells (M) and defined by the plurality of transducers (100) having been previously positioned on or in the structure (STR), the method comprising the steps consisting of:

  - extracting, (E2), depending on the excitation signals emitted (E1) by the first transducers (E) and on the reception signals received (E1) by the second transducers (R), a signature (S) for each of the mesh cells (M),
  - comparing (E3) the signatures (S) to one another to identify, among the mesh cells (M), at least one mesh cell as localizing a fault of the structure (STR), called a faulty mesh cell, when the signature (S) of this mesh cell (M) is different from several other signatures (S) of several other mesh cells (M),

the extraction (E2) and comparison (E3) steps being implemented by the calculation unit (103),
wherein the mesh cells (M) are equilateral triangles of which each vertex corresponds to the position of a first transducer (E),
wherein the positioning of the transducers 100 is considered to be a positioning of their projection on a horizontal plane with two dimensions.

2. The method for detecting faults of a structure (STR) according to claim 1, wherein the first transducers (E) are piezoelectric sensors (110a), and the second transducers (R) each comprise a Bragg grating (100b) of an optical fiber (105).

3. The method for detecting faults in a structure (STR) according to one of claims 1 and 2, wherein the distance separating two first transducers (E) within the meshing is 1.73 times the radius of each emission circle.

4. The method for detecting faults in a structure (STR) according to one of claims 1 to 3, wherein the faulty mesh cell is identified as having a signature which is different from the signatures, which are equal to one another, of at least two other mesh cells (M), each independently adjacent to the faulty mesh cell.

5. The method for detecting faults in a structure (STR) according to one of claims 1 to 4, wherein a first function of identifying a group defined by, successively, a first mesh cell (1), a second mesh cell (2) and a third mesh cell (6) is also defined by the fact that:

   - the first mesh cell (1), the second mesh cell (2) and the third mesh cell (6) are identified as non-faulty mesh cells (1, 2, 6), when the signatures of these mesh cells are equal,
   - when the signature of the first mesh cell (1) is different from the signature of the second mesh cell (2) equal to the signature of the third mesh cell (6), the first mesh cell (1) is identified as a faulty mesh cell,
   - when the signature of the first mesh cell (1) is equal to the signature of the second mesh cell (2) and is different from the signature of the third mesh cell (6), the first mesh cell (1) is identified as a non-faulty mesh cell and the third mesh cell (6) is identified as a suspect mesh cell,
   - in a first identification sub-step (E31), the first identification function is applied to a first group of three mesh cells (1, 2, 6), comprising successively a first mesh cell (1), a second mesh cell (2), which is adjacent to the first mesh cell (1), and a third mesh cell (6), which is adjacent to the first mesh cell (1).

6. The method for detecting faults in a structure (STR) according to claim 5, wherein, in a second identification sub-step (E32) subsequent to the first identification sub-step (E31), the first identification function is applied to another group of mesh cells defined by successively a starting mesh cell formed by the second mesh cell (2) and:

   - the first mesh cell (1), if the first mesh cell (1) has been identified as a non-faulty mesh cell, and a fourth mesh cell (3), which is adjacent to the starting mesh cell,
   - a fifth mesh cell (7), which is adjacent or non-adjacent to the first mesh cell (1), if the first mesh cell (1) has been identified as a faulty mesh cell, and the fourth mesh cell (3) which is adjacent to the starting mesh cell.

7. The method for detecting faults in a structure (STR) according to claim 6, wherein the second identification sub-step (E32) is reiterated one or more times on respectively one or more other groups of mesh cells.

8. The method for detecting faults in a structure (STR) according to claim 7, wherein the starting mesh cell of each second identification sub-step (32) is adjacent to the starting mesh cell of the second identification sub-step (E32) preceding it.

9. The method for detecting faults in a structure (STR) according to any one of claims 6 to 8, wherein the fourth mesh cell (3) and the fifth mesh cell (7) are different from the third mesh cell (6), which is identified as a suspect mesh cell.

10. The method for detecting faults in a structure (STR) according to any one of claims 5 to 9, wherein the mesh cells of each group are other than a mesh cell having been identified as a faulty mesh cell.

11. The method for detecting faults in a structure (STR) according to any one of claims 5 to 10, wherein, for the third mesh cell (6), which is identified as a suspect mesh cell, a second identification function is applied, defined by the fact that:

   - when the signature of the third mesh cell (6) is different from the signature of the first mesh cell (1) equal to the signature of a sixth mesh cell (7) adjacent to the third mesh cell (6), the third mesh cell (6) is identified as a faulty mesh cell,

- when the signature of the third mesh cell (6) is different from the signature of the first mesh cell (1) different from the signature of the sixth mesh cell (7), the third mesh cell (6) is identified as a faulty mesh cell and the sixth mesh cell (7) is identified as a suspect mesh cell,

- when the signature of the third mesh cell (6) is equal to the signature of the sixth mesh cell (7), a first indication signal is sent to a human-machine interface (104).

12. The method for detecting faults in a structure (STR) according to one of claims 1 to 3, wherein, during at least one classification sub-step (E33, E34), the mesh cells (M) having the same signature are classified in a same respective family:

- the mesh cells (M) which are classified in the respective family having the greatest number of mesh cells, called the healthy family, being identified as non-faulty mesh cells,

- each mesh cell (M) which is classified in a respective family having only a single mesh cell, called a respective faulty family, being identified as a faulty mesh cell.

13. The method for detecting faults in a structure (STR) according to claim 12, wherein, to classify the mesh cells (M):

- a first mesh cell (1) having a first signature (S1) is classified in a first family (F1), to which is attributed a respective reference equal to the first signature (S1),

- then successively for each other mesh cell (k) different from the first mesh cell (1), the classification sub-step (E34) is iterated according to which

  ◦ the signature (S2) of the other mesh cell (k) is compared to the respective reference of each family (F1),
  ◦ if the signature (S2) of the other mesh cell (k) is equal to the respective reference of one (Fj) of the families (F), then this other mesh cell (k) is classified in this family (Fj),
  ◦ if the signature (S2) of the other mesh cell (k) is not equal to any respective reference of the families (F), then this other mesh cell (k) is classified in a new family (F2), to which is attributed a respective reference equal to the signature (S2) of this other mesh cell (k).

14. The method for detecting faults in a structure (STR) according to claim 12 or 13, wherein:

- for each mesh cell belonging neither to the healthy family, nor to the respective faulty family(ies), called the mesh cell to be analyzed, a first distance is calculated between the signature of the mesh cell to be analyzed and the signature of the mesh cells of the healthy family, and a respective second distance between the signature of the mesh cell to be analyzed and the signature of the mesh cells of each respective faulty family is calculated to:

  ◦ when the first distance is less than each respective second distance, classify the mesh cell to be analyzed in the healthy family or identify the mesh cell to be analyzed as a non-faulty mesh cell,
  ◦ when the first distance is greater than one or more respective second distances, classify the mesh cell to be analyzed in the faulty family having this respective second distance, or identify the mesh cell to be analyzed as a faulty mesh cell.

# FIG. 1

# FIG. 2

## FIG. 3

## FIG. 4

## FIG. 5

## FIG. 6

# FIG. 7

# FIG. 8

# FIG. 9

## FIG. 10

Cny
Ck+1
Ck
C2
C1

Nombre
d'acquisition $M$

Temps $N$

Capteurs $n_y$

| $C_1$ | $C_2$ | $C_k$ | $C_{k+1}$ | $C_{ny}$ |
|---|---|---|---|---|

## FIG. 11

Zone structurale, considérée sans défaillance

Construction de la matrice de mesures (cf. équation 1)

Modèle ACP (cf. équations 2, 3)

Indicateur de défauts (cf. équations 4)

Construction de la matrice de mesures (cf. équation 1)

Zone structurale, considérée suspecte

FIG. 12

**Résultat de la détection de défauts**

Zone structurale N°1, considérée sans défaillance
Zone structurale N°2, considérée sans défaillance
Zone structurale N°3, considérée suspecte

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7937248 B
- US 20150308920 A
- US 2006287842 A
- US 2006164919 A
- US 4893025 A
- US 2005094490 A
- US 2009192727 A
- US 8707787 B
- FR 2262303
- US 2014123758 A

**Littérature non-brevet citée dans la description**

- **D.A. TIBADUIZA et al.** Damage classification in structural health monitoring using principal component analysis and self-organizing maps'' DAMAGE CLASSIFICATION IN SHM USING PCA AND SOM. *STRUCTURAL CONTROL AND HEALTH MONITORING, US*, vol. 20 (10), ISSN 1545-2255, 1303-1316
- **TIBADUIZA, D.A et al.** Structural damage detection using principal component analysis and damage indices. *Journal of Intelligent Material Systems and Structures*, 2015